# EUROPEAN PATENT SPECIFICATION

(11) **EP 4 043 973 B1**
(45) Date of publication and mention of the grant of the patent: **26.07.2023**
(21) Application number: 21156885.2
(22) Date of filing: 12.02.2021
(51) Int. Cl.: G05B 19/418, G06Q 10/06

(54) **GENERATING EXECUTION PROTOCOLS FOR PERFORMING STANDARD OPERATING PROCEDURES IN INDUSTRIAL PLANTS**
ERZEUGUNG VON AUSFÜHRUNGSPROTOKOLLEN ZUR DURCHFÜHRUNG VON STANDARDBETRIEBSVERFAHREN IN INDUSTRIELLEN ANLAGEN
GÉNÉRATION DE PROTOCOLES D'EXÉCUTION POUR EFFECTUER DES PROCÉDURES DE FONCTIONNEMENT STANDARD DANS DES INSTALLATIONS INDUSTRIELLES

(43) Date of publication of application: 17.08.2022
(73) Proprietor: ABB Schweiz AG, 5400 Baden (CH)
(72) Inventor: SCHMIDT, Benedikt, 69117 Heidelberg (DE); DOPPELHAMER, Jens, 68526 Ladenburg (DE); RODRIGUEZ, Pablo, 68549 Ilvesheim (DE); KLOEPPER, Benjamin, 68199 Mannheim (DE); BORRISON, Reuben, 68775 Ketsch (DE); DIX, Marcel, 68167 Mannheim (DE); ABUKWAIK, Hadil, 69469 Weinheim (DE); KOTRIWALA, Arzam, 68526 Ladenburg (DE); MACZEY, Sylvia, 69493 Hirschberg (DE); ZIOBRO, Dawid, 72462 Västerås (SE); LINGE, Simon, 72356 Västerås (SE); GAERTLER, Marco, 69221 Dossenheim (DE); SHARMA, Divyasheel, 560048 Bangalore (IN); K R, Chandrika, 560078 Bangalore (IN); GOPALAKRISHNAN, Gayathri, 171 71 Solna (SE); BERNING, Matthias, 67549 Worms (DE)
(74) Representative: Maiwald GmbH

(56) References cited:
- EP-A1- 3 361 330
- US-A1- 2015 363 518
- US-A1- 2017 322 536

## Description

### FIELD OF THE INVENTION

The invention relates to facilitating the execution of not fully automatable standard operating procedures, SOP, in industrial plants.

### BACKGROUND

For many safety-critical industrial plants, especially chemical plants, certain tasks are to be performed according to standard operating procedures, SOPs. These SOPs have been devised to ensure safe and reliable operation of the plant. For example, an SOP may specify what exactly to do in order to start the plant up, to shut the plant down, or to perform maintenance work on the plant or any part thereof. These and other tasks for which SOPs are mandated are frequently not fully automatable; rather, they require the enlisting of one or more human workers who have to execute the SOPs. The SOPs are frequently part of a certification or other licensing of plant operation, so adherence to SOPs is crucial.

EP 1 413 937 A1 discloses a control system for controlling an apparatus and/or a process based on a finite state machine. Information made available to an operator is enhanced by a graphical representation of the finite state machine on a display. The graphical representation comprises at least two states and at least one allowed transition between these two states.

US 2017/322 536 A1 discloses methods, systems and computer programs for optimizing the standard operating procedure for a control system. Specifically, based on a recorded sequence of control system operator actions, the standard operating procedure is optimized so as to reduce deviations between the recorded sequence of control system operator actions and the standard operating procedure.

US 2015/363 518 A1 discloses a method to determine an operating procedure for responding to an emergency event. The performance of a first operating procedure can be monitored. For a second, dynamic operating procedure, the performance can be simulated.

EP 3 361 330 A1 discloses a method for determining a manual operation procedure from log data of a manual operation event in an industrial plant. From the log data, manual operation sequences are extracted, and from these sequences, a manual operation procedure is constructed.

### OBJECTIVE OF THE INVENTION

It is an objective of the invention to assist the execution of SOPs in industrial plants by computer even though this execution itself is not fully automatable.

This objective is achieved by a first computer-implemented method for generating an execution protocol for at least one SOP according to a first independent claim, and by a second computer-implemented method for orchestrating the execution of an SOP that exploits the so-generated execution protocol. Further advantageous embodiments are detailed in the respective dependent claims.

### DISCLOSURE OF THE INVENTION

The invention provides a computer-implemented method for generating and/or augmenting an execution protocol for at least one standard operating procedure, SOP, in an industrial plant.

Herein, the term "protocol" is not to be construed limiting in the sense that this is the only way to execute the SOP and everything has to be done exactly according to this protocol. Rather, instructions in the protocol may allow some degree of freedom, such as "close all valves leading to a particular vessel" without specifying in which order the valves are to be closed. Also, there may be multiple distinct ways to execute the SOP. This might even be desirable from a reliability point of view. If the only way forward presumes the availability of a certain piece of equipment, and this piece of equipment fails, then this is a single point of failure, and execution of the SOP cannot continue. But if there is an alternative way of accomplishing the same result, using other pieces of equipment, there is no single point of failure anymore.

The method starts from at least one SOP of the plant that is provided. The SOP comprises a plurality of steps. Herein, the term "step" is not to be construed limiting in the sense that there is only one single sequence of steps leading from start to finish of the SOP. Rather, one or more steps in the SOP may optional, and at any point during execution of the SOP, there may be a choice between two or more alternative steps.

In the course of the method, measurement data that has been acquired during multiple executions of the at least one SOP is provided. This measurement data is indicative of actions performed in the plant that modify the state and/or the behavior of the plant or any part thereof for executing the SOP.

Examples of such measurement data include:
- log data that is indicative of the inputting of at least one instruction to modify the behavior of the plant or any part thereof into a distributed control system of the plant;
- measurement data delivered by at least one field device that is in direct relationship with an industrial process executed by the plant; and
- monitoring data that is indicative of the location, and/or of the behavior, of at least one worker who participates in executing the SOP.

For each step of the SOP, from this measurement data, a subset of the measurement data that is indicative of actions performed for the purpose of executing this particular step of the SOP is determined. That is, the measurement data may be split according to the steps of the SOP to which they pertain, and measurement data that is not relevant for execution of the SOP at all may be ignored.

The subset of the measurement data determined for each step of the SOP is aggregated into at least one instruction for executing this particular step of the SOP. This instruction is part of the sought protocol for executing the SOP as a whole.

The inventors have found that while SOPs are highly relevant for the plant operation, they are often specified in an early stage of the plant on a very abstract level. Therefore, they do not always contain later adjustments or the knowledge of people who have much experience with this specific plant. Much of this knowledge is hard to put in writing. Therefore, it is often only present in the brains of the workers who execute the SOP. Also, the abstract specification of the SOP may be open to interpretation to some degree.

For example, if the SOP specifies to open a valve "slowly", this does not specify unambiguously whether the opening is to be performed at a constant slow speed, or whether the opening is to start extremely slowly and speed up soon. Also, every worker may have a different notion of the concrete speed to which "slowly" refers.

Also, the new or amended protocol for executing the SOP contains richer detail that is particularly useful for aiding novices who have little experience with the plant. For example, if it has been logged that a worker who executes a particular step of the SOP always walks to a certain place within the plant, then the protocol for executing the SOP, which might previously just have mentioned a certain piece of equipment by name or by a relative term like "leftmost pump", will now contain a concrete location on the plant floor that cannot be mistaken for anything else. By contrast, the relative term "leftmost pump" might lead a novice who enters the building through the back door, rather than through the front door, to the wrong place.

An SOP may also refer to a technical location, e.g., a tag indicating a specific position, that can be hard to find. For example, the position indicated on the tag may need to be translated into a physical location in the plant by means of a piping and instrumentation diagram at least by a novice worker. But after having been there for a number of times, an experienced worker will remember the physical location without having to consult the diagram again.

Log data may, for example, be obtained from a plant historian that captures an audit trail of plant operation and sensor values. For example, the log data may specifically be indicative of one or more of:
- the setting of a new set-point for a low-level controller in the plant;
- the opening or closing of at least one valve in the plant;
- the starting or stopping of at least one piece of equipment in the plant; and
- the commanding of any other actuator that modifies the state or behavior of the plant or any part thereof.

Monitoring data that is indicative of the location, and/or of the behavior, of at least one worker who participates in executing the SOP may, for example, comprise one or more of:
- at least one video stream that shows at least one worker who participates in executing the SOP, and/or is captured with a camera worn by this worker;
- data that is indicative of a gaze direction of at least one worker who participates in executing the SOP;
- radio or audio recordings of the voice of at least one worker who participates in executing the SOP; and
- interactions, such as cursor movements and menu selections, between at least one worker who participates in executing the SOP and a human-machine interface of the distributed control system of the plant.

For example, a factory floor may be monitored by video surveillance to track where the worker is going in the plant. The location of the worker may also be obtained from a video stream that is captured with a camera worn by the worker. The latter, as well as a gaze direction of the worker, may also be used to monitor to what the worker is actually paying attention.

Radio or audio recordings of the voice of the worker may yield information as to which communication between this worker and other workers in the plant is necessary for executing the step of the SOP. For example, if the SOP for maintenance of a certain piece of equipment mandates disconnecting this equipment from the mains and securing it against reconnection, this may entail communicating with a central control room by two-way radio in order to have the power disconnected and the respective switch tagged and locked out.

Interactions between the worker and a human-machine interface may yield information as to which information a worker is looking up in this interface. For example, the SOP may specify that before a certain vessel is opened, the temperature and/or pressure inside must be verified. The interactions with the human-machine interface may augment the specification in the SOP with the information where the required information may be found.

In a particularly advantageous embodiment, the determining of a subset of the measurement data that relates to a step of the SOP comprises filtering, from the measurement data, a portion that relates to one or more of:
- a timeslot in which the step of the SOP was performed;
- equipment that is relevant for executing of the step of the SOP;
- a location in the plant that is relevant for executing the step of the SOP; and
- a worker who is assigned a role of participating in executing the step of the SOP; and
- components of graphical user interfaces which have high relevance for the execution.
That is, a "fuzzy alignment" process may be performed in order to cluster measurement data that is relevant to particular SOP steps, so as to drop data that is not related to execution of the SOP and to map the remaining data to SOP steps.

Equipment that is relevant for executing a step of the SOP may, for example, be extracted from the SOP description by suitable heuristics. Likewise, roles of workers who need to participate in executing the steps of the SOP may be extracted from the SOP description as well. Timeslots in which steps of the SOP was performed may be extracted from the measurement data itself in combination with the SOP description. For example, completion of certain steps of the SOP may manifest itself in some signature in the measurement data, such as records of the closing of a valve or of a flow dropping to zero.

Each single filtering criterion applied to the measurement data may be considered to be a "weak learner" that gives some notion, but no unambiguous decision, about the relevancy of a record of measurement data for a particular step of the SOP. But the combination of multiple such "weak learners" may provide for a much more accurate assessment of whether a certain record of measurement data is relevant for executing a particular step of an SOP. Therefore, in a particularly advantageous embodiment, the measurement data is filtered according to multiple criteria. A relevancy score is assigned to each record of measurement data. This relevancy score increases with the number of criteria that this particular record of measurement data fulfils. A record of measurement data may then be included in the subset that relates to a particular step of the SOP in response to the relevancy score exceeding a predetermined threshold.

In a further advantageous embodiment, the method further comprises determining, from the measurement data, from the already determined subsets, and/or from the already determined instructions, at least one directed sequence of actions that results in execution of the complete SOP as the sought protocol. This means that the method can not only fill in an execution protocol for the SOP with more details, but also elucidate one or more ways to traverse the SOP as a whole. The SOP itself may not be clear on the order in which certain actions need to be performed. In particular, the method may attach one single graph of actions that is derived from the measurements to the SOP, but there may be multiple ways to traverse this graph.

For example, the SOP may just call for the powering on of a machine, and this machine may be controlled by a separate control unit. There are now two ways to power on the machine: first power on the control unit and then power on the machine, or first power on the machine and then power on the control unit. On the face of it, there are reasons for both ways. Powering on the control unit first ensures that the machine will not have power without being under the control of the control unit. Powering on the machine first ensures that the control unit will not be confused because the machine is "missing" when the control unit is starting up. From the measurement data, the method may learn which of the two reasons is deemed to be more compelling in the context of this particular plant. Also, instructions and/or more detailed support communicated to a worker may to some extent be dynamic as a result of traversing the action graph differently. For example, no matter whether the worker is powering up the machine or the control unit first, he may always receive dynamic support for operating the piece of the equipment that he has chosen to start up first.

There are more examples of how an SOP can be executed on multiple different paths. The existence of multiple such paths may even be desirable for safety reasons. For example, relieving the pressure inside a vessel might normally be performed by an automatically controlled valve, but in case this valve is stuck or there is a power failure, it may become necessary to relieve the pressure using a manually operated valve.

Therefore, in a further advantageous embodiment, multiple sequences of actions that result in execution of the complete SOP are combined into a directed graph of these actions. In this manner, the method can learn all available alternatives for proceeding further in the SOP. This includes alternatives that were not foreseen at the time of establishing of the SOP. For example, in case of a malfunction of a certain piece of equipment, plant personnel may find a creative way of substituting the missing function by repurposing other equipment.

For example, if it is not possible to remove a load of acid from a reaction vessel because a subsequent vessel where the acid is to be neutralized is springing a leak, a different port of the reaction vessel might be repurposed to transport the acid to another vessel somewhere else in the plant, so it can be neutralized there and safely discharged.

Preferably, in this directed graph, each edge connecting a first action and a subsequent second action is assigned a probability that the second action will be executed given the first action, based on the provided measurement data. This makes it immediately clear what the preferred way to proceed further in the SOP and what is an auxiliary way.

Therefore, in a further advantageous embodiment, a path through the graph that selects, at each action that is connected to two or more possible next actions, the next action with the higher probability, is determined as an execution protocol for the SOP. In this manner, if different ways to execute certain steps of the SOP have been used previously by different workers, one standard way may be produced that should be used unless there is a compelling reason (such as a malfunction) for deviating from this. Having one standard way increases the probability that the SOP will be performed correctly because the potential for errors is reduced. For example, if a first worker who performs the SOP the one way watches a second worker performing a particular step differently, he may adopt this behavior even though this is wrong in the context of the path that the first worker is following. I.e., the adoption of multiple different execution protocols by different workers may give rise to an intermixing of the different execution protocols that violates the SOP.

The invention also provides a computer-implemented method for orchestrating the execution of at least one standard operating procedure, SOP, in an industrial plant.

In the course of this method, at least one execution protocol for the SOP that has been generated and/or augmented by the method described before is provided. This generating and/or augmenting may have been performed by the same entity that is orchestrating the execution of the SOP, or it may have been performed at least in part by a different entity. For example, a company who owns a plant where the SOP is to be performed might enlist the help of another company who provides the generation of the execution protocol from the measurement data as a service.

Measurement data is obtained that is indicative of at least one activity that at least one worker who is to participate in executing the SOP is performing. For example, this measurement data may be indicative of the location or gaze direction of the worker, or of what this worker is presently seeing. The measurement data may also, for example, relate to a state of a plant or any part thereof. For example, if the worker has already opened or closed a valve that is to be opened or closed, the measurement data may so indicate.

Based at least in part on the measurement data, at least one instruction that this worker is to carry out is selected from the execution protocol. The instruction to perform the at least one action is communicated to the worker. This communicating may be performed in any suitable manner. For example, the information may be overlaid onto an augmented reality display that the worker is using. For example, the worker may be guided to a location where the action is to be performed. The equipment that the worker should handle may then be highlighted in this augmented reality display. When the worker is interacting with the plant via a human-machine interface of a distributed control system,

In a particularly advantageous embodiment, in the course of selecting an instruction, it is determined whether the worker has already carried out an instruction, and/or is already at a location where this instruction is to be carried out. If this is the case, the instruction, and/or a direction to navigate to the location where this instruction is to be carried out, is suppressed. In this manner, the worker is not overloaded with unnecessary information. Such unnecessary information that is safe to ignore might cause the worker to ignore other, more safety relevant information as well.

Likewise, in a further advantageous embodiment, a skill level of the worker is determined based on current and/or past measurement data. The level of detail of the instruction is based on this skill level. For example, a worker who is already familiar with the plant might only need the instruction to go to a piece of equipment with a particular name or other label, while a novice worker might step-by-step instructions how to find that piece of equipment. For example, if a worker has always gone to the right place when instructed to go to a particular piece of equipment, the level of detail of the instructions may gradually decrease.

The computer implementation of the methods described above implies that the methods may be embodied in a computer program. The invention therefore also provides a computer program with machine-readable instructions that, when executed by one or more computers, cause the one or more computers to perform one of the methods described above. The invention also provides a non-transitory machine-readable storage medium, and/or a download product, with the computer program. A download product is a product that may be sold in an online shop for immediate fulfillment by download. The invention also provides one or more computers with the computer program, and/or with the non-transitory machine-readable storage medium and/or download product.

### DESCRIPTION OF THE FIGURES

In the following, the invention is illustrated using Figures without any intention to limit the scope of the invention. The Figures show:
Figure 1: Exemplary embodiment of the method 100 for generating and/or augmenting an execution protocol 4 for an SOP 2;
Figure 2: Exemplary execution protocol 4 generated by the method 100;
Figure 3: Exemplary embodiment of the method 200 for orchestrating the execution of an SOP 2.

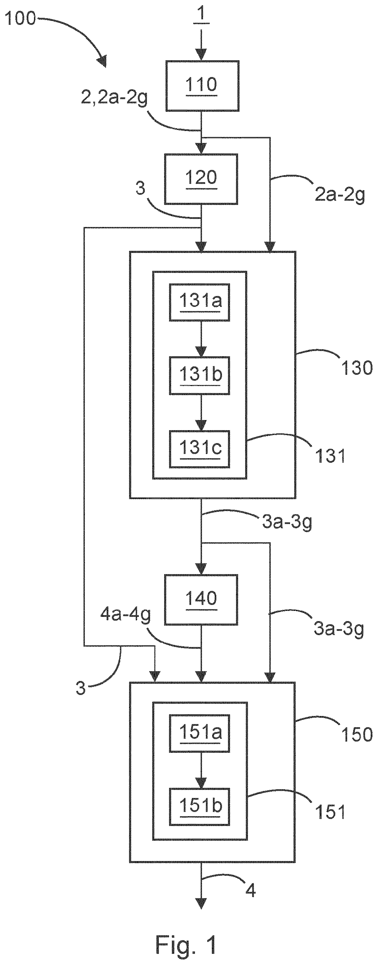

Figure 1 is a schematic flow chart of an embodiment of the method 100 for generating and/or augmenting an execution protocol 4 for an SOP 2.

In step 110, at least one SOP 2 that comprises a plurality of steps 2a-2g is provided. In step 120, measurement data 3 is provided. This measurement data 3 has been acquired during multiple executions of the at least one SOP 2. It is indicative of actions performed in the plant 1 that modify the state and/or the behavior of the plant 1 or any part thereof for the purpose of executing the SOP 2.

In step 130, for each step 2a-2g of the SOP 2, a subset 3a-3g of the measurement data 3 that is indicative of actions performed for the purpose of executing this particular step 2a-2g of the SOP is determined.

According to block 131, this determining 130 may specifically comprise "fuzzy filtering" from the measurement data according to one or more criteria, each of which may be a "weak learner". In particular, according to block 131a, the measurement data 3 may be filtered according to multiple criteria. According to block 131b, each record of measurement data 3 may be assigned a relevancy score, which increases with the number of criteria that this particular record of measurement data 3 fulfils. In response to this relevancy score exceeding a predetermined threshold, a record of measurement data 3 may be included in the subset 3a-3g according to block 131c.

In step 140, the subset 3a-3g of the measurement data 3 determined for each step 2a-2g of the SOP 2 is aggregated into at least one instruction 4a-4g for executing this particular step 2a-2g of the SOP. This instruction 4a-4g is part of the sought protocol 4.

In step 150, a directed sequence of actions that results in execution of the complete SOP 2 may be determined as the sought protocol 4 from the measurement data 3, from the subsets 3a-3g, and/or from the instructions 4a-4g. The actions may correspond to the instructions 4a-5g, but one or more of the instructions 4a-4g may also be broken down into more granular sub-actions.

According to block 151, multiple sequences of actions that result in execution of the complete SOP 2 may be combined into a directed graph of these actions. In particular, according to block 151a, to each edge connecting a first action and a subsequent second action, a probability that the second action will be executed given the first action may be assigned. According to block 151b, a path through the graph that selects, at each action that is connected to two or more possible next actions, the next action with the higher probability may be determined as an execution protocol 4 for the SOP 2.

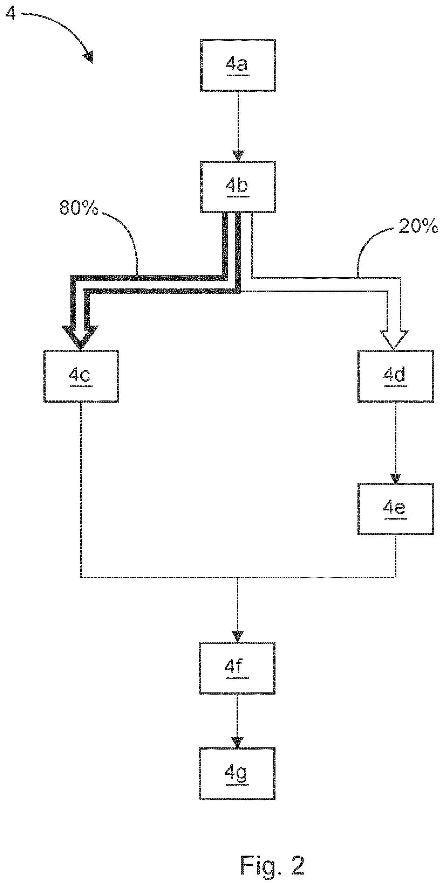

Figure 2 is an example of an execution protocol 4 for an SOP 2. The execution protocol 4 is in the form of a directed graph and comprises instructions 4a-4g that correspond to steps 2a-2g of the SOP 2. After the second step 4b, there are two options. The first option is to carry out instruction 4c. The second option is to carry out the combination of instructions 4d and 4e. Both options arrive at the same result that puts the plant 1 in a state where the next instruction 4f, and then finally instruction 4g, may be carried out.

For example, instruction 4c may relate to a straight-forward way of achieving the needed result, whereas the combination of instructions 4d and 4e may relate to an indirect way of achieving the same result. Therefore, as shown in Figure 2, according to the measurement data 3, the direct way is followed with a probability of 80 %, whereas the indirect way is followed with a probability of 20 %. The indirect way may, for example, be useful as a backup in case a piece of equipment that is necessary for the direct way is not available.

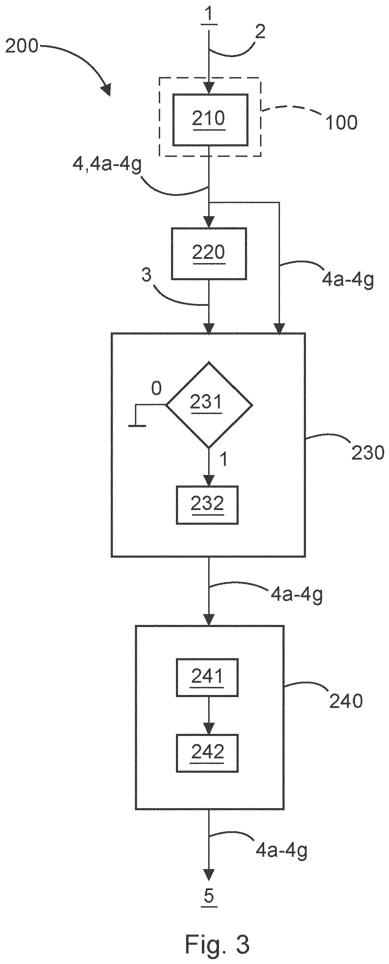

Figure 3 is a schematic flow chart of an exemplary embodiment of the method 200 for orchestrating the execution of at least one SOP 2.

In step 210, at least one execution protocol 4 with instructions 4a-4g that has been generated and/or augmented by the method 100 described above. In step 220, measurement data 3 is obtained. This measurement data 3 is indicative of at least one activity that at least one worker 5 is performing. The worker 5 is to participate in executing the SOP 2.

In step 230, based at least in part on the measurement data 3, at least one instruction 4a-5g that the worker 5 is to carry out is selected from the execution protocol 4. Herein, according to block 231, it may be determined whether the worker 5 has already carried out an instruction 4a-4g and/or is already at a location where this instruction 4a-4g is to be carried out. If this is the case (truth value 1), according to block 232, the instruction 4a-4g, and/or a direction to navigate to the location where this instruction 4a-4g is to be carried out, may be suppressed.

In step 240, the instruction 4a-4g is communicated to the worker 5. Herein, according to block 241, a skill level of the worker 5 may be determined based on current and/or past measurement data 3. According to block 242, the level of detail of the instruction may be adjusted based on this skill level.

### List of reference signs

- 1: industrial plant
- 2: standard operating procedure, SOP
- 2a-2g: steps of SOP 2
- 3: measurement data
- 3a-3g: subset of measurement data corresponding to steps 2a-2g
- 4: execution protocol for SOP 2
- 4a-4g: instructions in execution protocol 4
- 5: worker
- 100: method for generating and/or augmenting execution protocol 4
- 110: providing SOP 2
- 120: providing measurement data 3
- 130: determining subsets 3a-3g of measurement data 3 for steps 2a-2g
- 131: fuzzy filtering of measurement data 3
- 131a: filtering according to multiple criteria
- 131b: assigning relevancy to measurement data 3
- 131c: considering measurement data 3 based on relevancy
- 140: aggregating subsets 3a-3g into instructions 4a-4g
- 150: determining directed sequence of actions
- 151: producing directed graph of actions
- 151a: assigning probabilities to edges
- 151b: determining path with maximum probabilities
- 200: method for orchestrating execution of SOP 2
- 210: providing execution protocol 4
- 220: obtaining measurement data 3
- 230: selecting instruction 4a-4g
- 231: determining whether instruction 4a-4g carried out, location reached
- 232: suppressing instruction 4a-4g
- 240: communicating instruction 4a-4g to worker 5
- 241: determining skill level of worker 5
- 242: adjusting level of detail based on skill level

## Claims

1. A computer-implemented method (100) for generating and/or augmenting an execution protocol (4) for at least one standard operating procedure, SOP (2), in an industrial plant (1), comprising the steps of:
• providing (110) at least one SOP (2) of the plant (1), said SOP (2) comprising a plurality of steps (2a-2g);
• providing (120) measurement data (3) that has been acquired during multiple executions of the at least one SOP (2) and is indicative of actions performed in the plant (1) that modify the state and/or the behavior of the plant (1) or any part thereof for the purpose of executing the SOP (2); the method being **characterized in** the steps:
• for each step (2a-2g) of the SOP (2), determining (130), from the measurement data (3), a subset (3a-3g) of the measurement data (3) that is indicative of actions performed for the purpose of executing this particular step (2a-2g) of the SOP; and
• aggregating (140) the subset (3a-3g) of the measurement data (3) determined for each step (2a-2g) of the SOP (2) into at least one instruction (4a-4g) for executing this particular step (2a-2g) of the SOP, wherein this instruction (4a-4g) is part of the sought protocol (4).

2. The method (100) of claim 1, wherein the measurement data (3) comprises one or more of:
• log data that is indicative of the inputting of at least one instruction to modify the behavior of the plant (1) or any part thereof into a distributed control system of the plant;
• measurement data (3) delivered by at least one field device that is in direct relationship with an industrial process executed by the plant (1); and
• monitoring data that is indicative of the location, and/or of the behavior, of at least one worker (5) who participates in executing the SOP (2).

3. The method (100) of claim 2, wherein the log data specifically is indicative of one or more of:
• the setting of a new set-point for a low-level controller in the plant (1);
• the opening or closing of at least one valve in the plant (1);
• the starting or stopping of at least one piece of equipment in the plant (1); and
• the commanding of any other actuator that modifies the state or behavior of the plant (1) or any part thereof.

4. The method (100) of any one of claims 2 to 3, wherein the monitoring data comprises one or more of:
• at least one video stream that shows at least one worker (5) who participates in executing the SOP (2), and/or is captured with a camera worn by this worker (5);
• data that is indicative of a gaze direction of at least one worker (5) who participates in executing the SOP (2);
• radio or audio recordings of the voice of at least one worker (5) who participates in executing the SOP (2); and
• interactions, such as cursor movements and menu selections, between at least one worker (5) who participates in executing the SOP (2) and a human-machine interface of the distributed control system of the plant (1).

5. The method (100) of any one of claims 1 to 4, wherein the determining (130) of a subset (3a-3g) of the measurement data (3) that relates to a step (2a-2g) of the SOP (2) specifically comprises filtering (131), from the measurement data (3), a portion that relates to one or more of:
• a timeslot in which the step (2a-2g) of the SOP (2) was performed;
• equipment that is relevant for executing of the step (2a-2g) of the SOP (2);
• a location in the plant (1) that is relevant for executing the step (2a-2g) of the SOP (2);
• a worker (5) who is assigned a role of participating in executing the step (2a-2g) of the SOP (2); and
• components of graphical user interfaces which have high relevance for the execution.

6. The method (100) of claim 5, further comprising:
• filtering (131a) the measurement data (3) according to multiple criteria;
• assigning (131b), to each record of measurement data (3), a relevancy score, wherein this relevancy score increases with the number of criteria that this particular record of measurement data (3) fulfils; and
• including (131c) a record of measurement data (3) in the subset (3a-3g) in response to the relevancy score exceeding a predetermined threshold.

7. The method (100) of any one of claims 1 to 6, further comprising: determining (150), from the measurement data (3), from the subsets (3a-3g), and/or from the instructions (4a-4g), at least one directed sequence of actions that results in execution of the complete SOP (2) as the sought protocol (4).

8. The method (100) of claim 7, further comprising: combining (151) multiple sequences of actions that result in execution of the complete SOP (2) into a directed graph of these actions.

9. The method (100) of claim 8, further comprising: assigning (151a), to each edge connecting a first action and a subsequent second action, based on the provided measurement data (3), a probability that the second action will be executed given the first action.

10. The method (100) of claim 9, further comprising: determining (151b), as an execution protocol (4) for the SOP (2), a path through the graph that selects, at each action that is connected to two or more possible next actions, the next action with the higher probability.

11. A computer-implemented method (200) for orchestrating the execution of at least one standard operating procedure, SOP (2), in an industrial plant (1), comprising the steps of:
• providing (210) at least one execution protocol (4) for the SOP (2) that has been generated and/or augmented by the method (100) according to any one of claims 1 to 10;
• obtaining (220) measurement data (3) that is indicative of at least one activity that at least one worker (5) who is to participate in executing the SOP (2) is performing;
• selecting (230), based at least in part on this measurement data (3), at least one instruction (4a-4g) that this worker (5) is to carry out from the execution protocol (4); and
• communicating (240) the instruction (4a-4g) to the worker (5).

12. The method (200) of claim 11, wherein the selecting at least one instruction comprises:
• determining (231) whether the worker (5) has already carried out an instruction (4a-4g) and/or is already at a location where this instruction (4a-4g) is to be carried out; and
• if this is the case, suppressing (232) this instruction (4a-4g), and/or a direction to navigate to the location where this instruction (4a-4g) is to be carried out.

13. The method (200) of claim 11 or 12, wherein the communicating (240) the instruction (4a-4g) comprises:
• determining (241), based on current and/or past measurement data (3), a skill level of the worker (5), and
• adjusting (242) the level of detail of the instruction (242) based on this skill level.

14. A computer program, comprising machine-readable instructions that, when executed by one or more computers, cause the one or more computers to perform a method (100, 200) of any one of claims 1 to 13.

15. A non-transitory machine-readable storage medium having stored thereon the computer program of claim 14.

16. One or more computers comprising means for carrying out the method of one of claims 1 - 13.

## Patentansprüche

1. Ein computer-implementiertes Verfahren (100) zum Erzeugen und/oder Erweitern eines Ausführungsprotokolls (4) für mindestens ein Standardbetriebsverfahren, SOP (2), in einer Industrieanlage (1), umfassend die Schritte:
• Bereitstellen (110) mindestens eines SOP (2) der Industrieanlage (1), wobei das besagte SOP (2) eine Mehrzahl von Schritten (2a-2g) aufweist;
• Bereitstellen (120) von Messdaten (3), die während mehrerer Ausführungen des mindestens einen SOP (2) aufgenommen wurden und auf in der Industrieanlage (1) vorgenommene Aktionen hindeuten, die den Zustand und/oder das Verhalten der Industrieanlage (1) oder irgendeines Teils hiervon verändern mit dem Zweck, das SOP (2) auszuführen;
wobei das Verfahren durch die Schritte charakterisiert ist,
• für jeden Schritt (2a-2g) des SOP (2) aus den Messdaten (3) eine Teilmenge (3a-3g) der Messdaten (3) auszuwerten, die auf Aktionen hindeuten, die zum Zweck der Ausführung dieses bestimmten Schritts (2a-2g) der SOP vorgenommen wurden; und
• die für jeden Schritt (2a-2g) des SOP (2) ermittelte Teilmenge (3a-3g) der Messdaten (3) zu mindestens einer Anweisung (4a-4g) für die Ausführung dieses bestimmten Schritts (2a-2g) der SOP zu aggregieren (140), wobei diese Anweisung (4a-4g) Teil des gesuchten Protokolls (4) ist.

2. Verfahren (100) nach Anspruch 1, wobei die Messdaten (3) eine oder mehrere der folgenden umfassen:
• Log-Daten, die darauf hindeuten, dass mindestens eine Anweisung zum Ändern des Verhaltens der Industrieanlage (1) oder irgendeines Teils hiervon in ein verteiltes Steuerungssystem der Industrieanlage eingegeben wurde;
• Messdaten (3), die von mindestens einem Feldgerät geliefert wurden, das in direkter Beziehung mit einem von der Industrieanlage (1) ausgeführten industriellen Prozess ist; und
• Überwachungsdaten, die auf die Position und/oder auf das Verhalten, mindestens eines an der Ausführung des SOP (2) beteiligten Arbeiters (5) hindeuten.

3. Verfahren (100) nach Anspruch 2, wobei die Log-Daten speziell auf eine oder mehreren der folgenden hindeuten:
• das Setzen eines neuen Sollwerts für einen untergeordneten Regler in der Industrieanlage (1);
• das Öffnen oder Schließen mindestens eines Ventils in der Industrieanlage (1);
• das Starten oder Stoppen mindestens eines Geräts in der Industrieanlage (1); und
• das Ansteuern irgendeines anderen Aktuators, der den Zustand oder das Verhalten der Industrieanlage (1) oder irgendeines Teils hiervon verändert.

4. Verfahren (100) nach einem der Ansprüche 2 bis 3, wobei die Überwachungsdaten eine oder mehrere der folgenden umfassen:
• mindestens einen Video-Datenstrom, der mindestens einen Arbeiter (5) zeigt, der an der Ausführung des SOP (2) beteiligt ist, und/oder von einer durch diesen Arbeiter (5) mitgeführten Kamera aufgezeichnet wird;
• Daten, die auf die Blickrichtung mindestens eines an der Ausführung des SOP (2) beteiligten Arbeiters (5) hindeuten;
• Radio- oder Audioaufnahmen der Stimme mindestens eines an der Ausführung des SOP (2) beteiligten Arbeiters (5); und
• Interaktionen, wie Cursorbewegungen und Menüauswahlen, zwischen mindestens einem an der Ausführung des SOP (2) beteiligten Arbeiter (5) und einer Mensch-Maschine-Schnittstelle des verteilten Steuerungssystems der Industrieanlage (1).

5. Verfahren (100) nach einem der Ansprüche 1 bis 4, wobei das Ermitteln (130) einer Teilmenge (3a-3g) der Messdaten (3), die sich auf den Schritt (2a-2g) des SOP (2) bezieht, spezifisch umfasst, aus den Messdaten (3) einen Anteil zu filtern (131), der sich auf eins oder mehrere der folgenden bezieht:
• einen Zeitslot, in dem der Schritt (2a-2g) des SOP (2) ausgeführt wurde;
• Geräte, die für die Ausführung des Schritts (2a-2g) des SOP (2) relevant sind;
• eine Position in der Industrieanlage (1), die für die Ausführung des Schritts (2a-2g) des SOP (2) relevant ist;
• einen Arbeiter (5), der die Rolle zugewiesen bekommt, sich an der Ausführung des Schritts (2a-2g) des SOP (2) zu beteiligen; und
• Komponenten einer graphischen Benutzeroberfläche, die eine hohe Relevanz für die Ausführung haben.

6. Verfahren(100) nach Anspruch 5, weiterhin umfassend:
• Filtern (131a) der Messdaten (3) nach mehreren Kriterien;
• Zuweisen (131b) eines Relevanz-Scores zu jedem Record von Messdaten (3), wobei dieser Relevanz-Score mit der Anzahl von Kriterien, die genau dieser Record von Messdaten (3) erfüllt, zunimmt; und
• Aufnehmen (131c) eines Records von Messdaten (3) in die Teilmenge (3a-3g) in Antwort darauf, dass der Relevanz-Score einen vorgegebenen Schwellwert überschreitet.

7. Verfahren (100) nach einem der Ansprüche 1 bis 6, weiterhin umfassend: Ermitteln (150) mindestens einer gerichteten Sequenz von Aktionen, aus der die Ausführung des vollständigen SOP (2) resultiert, als das gesuchte Protokoll (4) aus den Messdaten (3), aus den Teilmengen (3a-3g), und/oder aus den Anweisungen (4a-4g).

8. Verfahren (100) nach Anspruch 7, weiterhin umfassend: Kombinieren (151) mehrerer Sequenzen von Aktionen, aus denen die Ausführung des vollständigen SOP (2) resultiert, in einen gerichteten Graphen dieser Aktionen.

9. Verfahren (100) nach Anspruch 8, weiterhin umfassend: Zuweisen (151a) einer Wahrscheinlichkeit, dass nach einer gegebenen ersten Aktion eine zweite Aktion ausgeführt wird, zur jeweiligen Kante, die die erste Aktion und die nachfolgende zweite Aktion verbindet, basierend auf den bereitgestellten Messdaten (3).

10. Verfahren (100) nach Anspruch 9, weiterhin umfassend: Ermitteln (151b) eines Pfades durch den Graphen, der bei jeder Aktion, die mit zwei oder mehr nächsten möglichen Aktionen verbunden ist, die nächste Aktion mit der höheren Wahrscheinlichkeit auswählt, als ein Ausführungsprotokoll (4) für das SOP (2).

11. Computer-implementiertes Verfahren (200) zum Orchestrieren der Ausführung mindestens eines Standardbetriebsverfahrens, SOP (2), in einer Industrieanlage (1), umfassend die Schritte:
• Bereitstellen (210) mindestens eine Ausführungsprotokolls (4) für das SOP (2), das mit dem Verfahren (100) nach einem der Ansprüche 1 bis 10 erzeugt und/oder erweitert wurde;
• Erwerben (220) von Messdaten (3), die auf mindestens eine Aktivität hindeuten, die ein Arbeiter (5) vornimmt, der sich an der Ausführung des SOP (2) beteiligen soll;
• Auswählen (230) mindestens einer Anweisung (4a-4g) aus dem Ausführungsprotokoll (4), die dieser Arbeiter (5) ausführen soll, basierend mindestens teilweise auf diesen Messdaten (3), und
• Kommunizieren (240) der Anweisung (4a-4g) an den Arbeiter (5).

12. Verfahren (200) nach Anspruch 11, wobei das Auswählen mindestens einer Anweisung umfasst:
• Ermitteln (231), ob der Arbeiter (5) schon eine Anweisung (4a-4g) ausgeführt hat, und/oder schon an einer Position ist, wo diese Anweisung (4a-4g) ausgeführt werden soll; und
• wenn dies der Fall ist, Unterdrücken (232) dieser Anweisung (4a-4g), und/oder einer Anweisung, zu der Position, an der diese Anweisung (4a-4g) auszuführen ist, zu navigieren.

13. Verfahren (200) nach Anspruch 11 oder 12, wobei das Kommunizieren (240) der Anweisung (4a-4g) umfasst:
• Ermitteln (241) eines Fähigkeits-Levels des Arbeiters (5), basierend auf aktuellen und/oder vergangenen Messdaten (3), und
• Anpassen (242) des Detaillierungs-Levels der Anweisung (242) basierend auf dem Fähigkeits-Level.

14. Computerprogramm, umfassend maschinenlesbare Anweisungen, die, wenn sie auf einem oder mehreren Computern ausgeführt werden, die ein oder mehreren Computer veranlassen, ein Verfahren (100, 200) nach einem der Ansprüche 1 bis 13 auszuführen.

15. Nichtflüchtiges maschinenlesbares Speichermedium, auf dem das Computerprogramm nach Anspruch 14 gespeichert ist.

16. Ein oder mehrere Computer, umfassend Mittel, das Verfahren nach einem der Ansprüche 1-13 auszuführen.

## Revendications

1. Procédé mis en œuvre par ordinateur (100) pour générer et/ou augmenter un protocole d'exécution (4) pour au moins une procédure d'exploitation standard, SOP (2), dans une installation industrielle (1), le procédé comprenant les étapes suivantes :
- fournir (110) au moins une SOP (2) de l'installation (1), ladite SOP (2) comprenant une pluralité d'étapes (2a-2g) ;
- fournir (120) des données de mesure (3) qui ont été acquises au cours de plusieurs exécutions de l'au moins une SOP (2) et qui sont indicatives d'actions effectuées dans l'installation (1) qui modifient l'état et/ou le comportement de l'installation (1), ou de toute partie de celle-ci, dans le but d'exécuter la SOP (2) ;
le procédé étant **caractérisé par** les étapes suivantes :
- pour chaque étape (2a-2g) de la SOP (2), déterminer (130), à partir des données de mesure (3), un sous-ensemble (3a-3g) des données de mesure (3) qui est indicatif des actions effectuées dans le but d'exécuter cette étape particulière (2a-2g) de la SOP ; et
- agréger (140) le sous-ensemble (3a-3g) des données de mesure (3) déterminées pour chaque étape (2a-2g) de la SOP (2) en au moins une instruction (4a-4g) pour l'exécution de cette étape particulière (2a-2g) de la SOP, où cette instruction (4a-4g) fait partie du protocole recherché (4).

2. Procédé (100) selon la revendication 1, dans lequel les données de mesure (3) comprennent un ou plusieurs des éléments suivants :
- des données de journal qui sont indicatives de l'entrée d'au moins une instruction visant à modifier le comportement de l'installation (1) ou d'une partie de celle-ci dans un système de contrôle distribué de l'installation ;
- des données de mesure (3) fournies par au moins un dispositif de terrain en relation directe avec un processus industriel exécuté par l'installation (1) ; et
- des données de surveillance qui sont indicatives de l'emplacement et/ou du comportement d'au moins un travailleur (5) qui participe à l'exécution de la SOP (2) .

3. Procédé (100) selon la revendication 2, dans lequel les données de journal sont spécifiquement indicatives d'un ou plusieurs des éléments suivants :
- le réglage d'un nouveau point de consigne pour un contrôleur de bas niveau dans l'installation (1) ;
- l'ouverture ou la fermeture d'au moins une vanne dans l'installation (1) ;
- le démarrage ou l'arrêt d'au moins un équipement de l'installation (1) ; et
- la commande de tout autre actionneur qui modifie l'état ou le comportement de l'installation (1) ou de toute partie de celle-ci.

4. Procédé (100) selon l'une quelconque des revendications 2 à 3, dans lequel les données de surveillance comprennent une ou plusieurs des données suivantes :
- au moins un flux vidéo qui montre au moins un travailleur (5) qui participe à l'exécution de la SOP (2), et/ou qui est capturé par une caméra portée par ce travailleur (5) ;
- des données indiquant la direction du regard d'au moins un travailleur (5) qui participe à l'exécution de la SOP (2) ;
- des enregistrements radio ou audio de la voix d'au moins un travailleur (5) qui participe à l'exécution de la SOP (2) ; et
- des interactions, telles que les mouvements de curseur et des sélections de menu, entre au moins un travailleur (5) qui participe à l'exécution de la SOP (2) et une interface homme-machine du système de contrôle distribué de l'installation (1).

5. Procédé (100) selon l'une quelconque des revendications 1 à 4, dans lequel la détermination (130) d'un sous-ensemble (3a-3g) des données de mesure (3) qui se rapporte à une étape (2a-2g) de la SOP (2) comprend spécifiquement le filtrage (131), à partir des données de mesure (3), d'une partie qui se rapporte à un ou plusieurs des éléments suivants :
- un créneau horaire au cours duquel l'étape (2a-2g) de la SOP (2) a été exécutée ;
- un équipement pertinent pour l'exécution de l'étape (2a-2g) de la SOP (2) ;
- un emplacement dans l'installation (1) qui est pertinent pour l'exécution de l'étape (2a-2g) de la SOP (2) ; et
- un travailleur (5) dont le rôle est de participer à l'exécution de l'étape (2a-2g) de la SOP (2) ; et
- des composants d'interfaces utilisateur graphiques qui ont une grande importance pour l'exécution.

6. Procédé (100) selon la revendication 5, comprenant en outre les étapes suivantes :
- filtrer (131a) les données de mesure (3) en fonction de critères multiples ;
- attribuer (131b), à chaque enregistrement de données de mesure (3), un score de pertinence, ce score de pertinence augmentant avec le nombre de critères que cet enregistrement particulier de données de mesure (3) satisfait ; et
- inclure (131c) un enregistrement de données de mesure (3) dans le sous-ensemble (3a-3g) en réponse au fait que la note de pertinence dépasse un seuil prédéterminé.

7. Procédé (100) selon l'une quelconque des revendications 1 à 6, comprenant en outre de déterminer (150), à partir des données de mesure (3), à partir des sous-ensembles (3a-3g), et/ou à partir des instructions (4a-4g), au moins une séquence dirigée d'actions qui aboutit à l'exécution de la SOP complète (2) en tant que protocole recherché (4).

8. Procédé (100) selon la revendication 7, comprenant en outre de combiner (151) de multiples séquences d'actions qui aboutissent à l'exécution de la SOP complète (2) en un graphe dirigé de ces actions.

9. Procédé (100) selon la revendication 8, comprenant en outre d'attribuer (151a), à chaque arête reliant une première action et une deuxième action ultérieure, sur la base des données de mesure fournies (3), une probabilité que la deuxième action soit exécutée compte tenu de la première action.

10. Procédé (100) selon la revendication 9, comprenant en outre de déterminer (151b), en tant que protocole d'exécution (4) pour la SOP (2), un chemin à travers le graphe qui sélectionne, à chaque action qui est connectée à deux, ou davantage, actions suivantes possibles, l'action suivante ayant la probabilité la plus élevée.

11. Procédé (200) mis en œuvre par ordinateur pour orchestrer l'exécution d'au moins une procédure d'exploitation standard, SOP (2), dans une installation industrielle (1), le procédé comprenant les étapes suivantes :
- fournir (210) au moins un protocole d'exécution (4) pour la SOP (2) qui a été généré et/ou augmenté par le procédé (100) selon l'une quelconque des revendications 1 à 10 ;
- obtenir (220) des données de mesure (3) qui sont indicatives d'au moins une activité qu'effectue au moins un travailleur (5) qui doit participer à l'exécution de la SOP (2) ;
- sélectionner (230), sur la base, au moins en partie, de ces données de mesure (3), au moins une instruction (4a-4g) que ce travailleur (5) doit exécuter à partir du protocole d'exécution (4) ; et
- communiquer (240) l'instruction (4a-4g) au travailleur (5) .

12. Procédé (200) selon la revendication 11, dans lequel la sélection d'au moins une instruction comprend les étapes suivantes :
- déterminer (231) si le travailleur (5) a déjà exécuté une instruction (4a-4g) et/ou se trouve déjà à un endroit où cette instruction (4a- 4g) doit être exécutée ; et
- si tel est le cas, supprimer (232) cette instruction (4a-4g) et/ou une instruction de navigation vers l'endroit où cette instruction (4a-4g) doit être exécutée.

13. Procédé (200) selon la revendication 11 ou la revendication 12, dans lequel la communication (240) de l'instruction (4a-4g) comprend les étapes suivantes :
- déterminer (241), sur la base de données de mesure actuelles et/ou passées (3), un niveau de compétence du travailleur (5), et
- ajuster (242) le niveau de détail de l'instruction (242) sur la base de ce niveau de compétence.

14. Programme informatique comprenant des instructions lisibles par une machine qui, lorsqu'elles sont exécutées par un ou plusieurs ordinateurs, amènent les un ou plusieurs ordinateurs à exécuter un procédé (100, 200) de l'une quelconque des revendications 1 à 13.

15. Support de stockage non transitoire lisible par une machine sur lequel est stocké le programme informatique de la revendication 14.

16. Un ou plusieurs ordinateurs comprenant des moyens pour mettre en œuvre le procédé de l'une des revendications 1 à 13.
